# EUROPÄISCHE PATENTSCHRIFT

(11) **EP 1 912 540 B1**
(45) Veröffentlichungstag und Bekanntmachung des Hinweises auf die Patenterteilung: **23.12.2009**
(21) Anmeldenummer: 06741603.2
(22) Anmeldetag: 24.05.2006
(51) Int. Cl.: A47J 17/02

(54) **GEMÜSESCHÄLER**
VEGETABLE PEELER
EPLUCHE-LEGUMES

(30) Priorität: 07.06.2005 CH 965052005
(43) Veröffentlichungstag der Anmeldung: 23.04.2008
(73) Patentinhaber: Rasa, Iwan, 8505 Pfyn (CH)
(72) Erfinder: Rasa, Iwan, 8505 Pfyn (CH)
(86) Internationale Anmeldenummer: PCT/CH2006/000274
(87) Internationale Veröffentlichungsnummer: WO 2006/131005

(56) Entgegenhaltungen:
- DE-A1- 19 523 407
- FR-A- 871 862
- US-A- 2 007 647

## Beschreibung

Die Erfindung bezieht sich auf Gemüseschäler nach dem Oberbegriff des Anspruches 1.

Gemüseschäler sind seit vielen Jahrzehnten bekannt. Es gibt sie in den verschiedensten Ausführungsformen, solche bei denen das Schälmesser in Form einer Pendelklinge ausgebildet ist, oder solche mit einer starren Schälklinge. Derartige Gemüseschäler sind entweder einseitig, ähnlich wie ein Messer, an einem Stiel gehalten oder beidseitig zwischen zwei Seitenflächen gelagert. Die Seitenflächen der beidseitig gelagerten Messer sind meist bügelförmig miteinander verbunden, wobei diese Verbindung einen Griff bildet. Stiele oder bügelförmige Griffe bilden die Halter an denen die Schälmesser gelagert sind. Die Schälmesser umfassen jeweils eine Schneidkante, einen Schneidspalt und eine Auflagelinie, wobei die Auflagelinie auf der der Schneidkante gegenüberliegenden Seite des Schneidspaltes ausgebildet ist. Gegebenenfalls ist auch die Auflagelinie als Schneidkante ausgebildet, so dass das Schälmesser in zwei entgegen gesetzten Richtungen zum Schälen eingesetzt werden kann, wobei immer eine Schneidkante schneidet und eine als Auflagelinie dient.

Aus den Schriften US-A-2 252 094, US-A-2 351 327 und US-A-3 956 825 sind Gemüseschäler bekannten, deren Schälmesser nur auf einer Seite gehalten, bzw. mit einem Griff verbunden, sind. Die zum gezielten Führen des Schälmessers nötigen Bewegungen sind aufgrund des durch den Griff gebildeten Hebelarmes relativ gross. Dies führt beim Schälen zu einem schnellen Ermüden.

Gemüseschäler mit beidseitig gelagerten Pendelklingen sind beispielsweise aus US-A-2 986 813 und US 5865110 bekannt. Auch bei diesen Gemüseschälern sind die zum Schälen nötigen Bewegungen aufwändig.

Aus der WO 03/070070 A1 ist ein Gemüseschäler mit zwei seitlichen Griffflächen bekannt, bei dem die Messerlage bereits mit kleinen Bewegungen stark verändert werden kann.

US 2 007 647 beschreibt ein Schälmesser bei dem die Schneidkante von einer einsetzbaren Klinge gebildet wird. Die Klinge wird mit einem flächigen Halteelement an einer von der Schneidkante wegführenden Führungsoberfläche befestigt. FR 871 862 beschreibt einen ähnlichen Schäler, wobei die Schneidkante direkt an der Führungsfläche ausgebildet ist. Beim Schälen liegt die Führungsfläche im Bereich der Schneidkante mit der Aussenfläche im Wesentlichen tangential an einer im Wesentlichen horizontalen Oberfläche des Schälguts an und eine abgetrennte Schale gleitet über die Führungsoberfläche hinaus auf das darunterliegende Schälgut.

DE 195 23 407 A1 beschreibt einen Schäler mit einem Halter, einer Pendelklinge und einem bei der Pendelklinge am Halter angeordneten Winkelelement. Die Pendelklinge ist in einer solchen Weise über dem Winkelelement angeordnet, dass die Schneidkante bei einer zum Schälen nötigen, zum Schälgut angewinkelten Ausrichtung des Halters nicht mehr in Kontakt kommt mit dem zu schälenden Gut, weil die Schneidkante über dem Winkelelement liegt, welches dann am Gut aufliegt. Mit der Schneidkante der Pendelklinge kann keine Schale abgetrennt werden. Es kann lediglich mit zwei messerartigen Seitenlinien des Winkelelements gearbeitet werden.

Es hat sich nun aber gezeigt, dass bei den gängigen Gemüseschälern zumindest bei einigem Gemüse oder auch bei Früchten Zusatzbewegungen mit dem Gemüse bzw. der Frucht oder mit dem Gemüseschäler gemacht werden müssen, weil bereits abgetrennte Schalenstücke den weitern Schälvorgang stören. Insbesondere beim Schälen von langem Gemüse wie Gurken oder Karotten kommen abgetrennte Schalenstücke auf das zu schälende Gemüse zu liegen. Bei Gemüse, mit hoher Feuchtigkeit, beispielsweise bei Gurken, können die abgeschnittenen Schalen stark am Gemüse haften.

An einer Messe wurde bereits ein seifendosenförmiger Gemüseschäler vorgestellt, der die abgetrennten Schalen im Doseninnern aufnimmt. Das Schälmesser ist mittig an einer grossen flachen Dosenunterseite angeordnet. Obwohl nun die abgeschnittenen Schalen nicht mehr auf das Gemüse zu liegen kommen, ist dieser Gemüseschäler äusserst unpraktisch. Einerseits sieht man beim Schälen den zu schälenden Gemüsebereich nicht und andererseits muss die Dose häufig geöffnet, geleert und wieder verschlossen werden.

Die erfindungsgemässe Aufgabe besteht nun darin einen Gemüseschäler zu finden, welcher ein Schälen mit minimalem Aufwand ermöglicht.

Die Aufgabe wird durch die Merkmale des Anspruches 1 gelöst. Die abhängigen Patentansprüche beschreiben bevorzugte Ausführungsformen.

Im Rahmen der Erfindung wurde erkannt, dass die abgeschnittenen Schalen vom Gemüseschäler in Schälrichtung vor dem Schälmesser weggeführt werden können, ohne dass dabei der Schälvorgang beeinträchtigt wird. Die Schalen fallen dabei in Schälrichtung vor dem Schälmesser neben dem Gemüse nach unten und das Gemüse bleibt frei von Schalen. Die Schälrichtung ist die Richtung, in welche der Gemüseschäler beim Schälen bewegt wird und damit auch die Richtung, in welche die Schneidkante des Schälmessers beim Schälen zeigt. Beim Schälen ist das Schälmesser so ausgerichtet, dass die Schälrichtung von der Schneidkante gegen die Auflagelinie gerichtet ist.

Mit einer Umlenkfläche, die beim Schälvorgang in Schälrichtung zumindest teilweise hinter der Schneidkante liegt, kann die abgeschnittene Schale bzw. das Schälgut in Schälrichtung nach vorne umgelenkt werden. Die Umlenkfläche schliesst zumindest in einem mittleren Bereich, vorzugsweise aber über die ganze Breite, des Schälmessers an dieses an und verhindert, dass die Schale in Schälrichtung hinter dem Schälmesser auf das Gemüse oder die Frucht zu liegen kommt. Der Gemüseschäler umfasst in Schälrichtung vor dem Schälmesser einen Austrittsbereich, so dass abgeschnittene Schalenstücke von der Umlenkfläche in Schälrichtung nach vorne umgelenkt werden und durch den Austrittsbereich aus dem Gemüseschäler hinausfallen.

Um eine sichere und vollständige Umlenkung eines abgelösten Schalenstreifens sicher zu stellen, muss die Umlenkfläche in Schälrichtung hinter dem Schälmesser an dieses anschliessen und sich über einen genügend grossen Bereich erstrekken. Die Umlenkfläche ist gegebenenfalls mit dem Schälmesser verbunden oder sie ist vom Schälmesser getrennt. Beim Übergang vom Schälmesser zur Umlenkfläche ist an der Umlenkfläche eine Anschlusslinie ausgebildet. Wenn zwischen dem Schälmesser und der Umlenkfläche ein kleiner Abstandsspalt ausgebildet ist, so ist die Anschlusslinie an einem Rand der Umlenkfläche ausgebildet, welcher dem Schälmesser zugewandt ist.

Das Schälmesser umfasst eine Schneidkante, einen Schneidspalt und eine Auflagelinie, wobei die Auflagelinie auf der der Schneidkante gegenüberliegenden Seite des Schneidspaltes ausgebildet ist. Die Schälmesserachse erstreckt sich in der Längsrichtung des Schälmessers und somit im Wesentlichen parallel zur Schneidkante. Beim Schälen ist das Schälmesser im Wesentlichen in einer Schälebene ausgerichtet. Die Auflagelinie liegt direkt vor dem Lösen des Schalenstückes an der freien Oberfläche des Schalenstückes an und die Schneidkante liegt bei der Unterseite des abgetrennten Schalenstückes. Bei der Bewegung des Schälmessers in Schälrichtung wird das Schalenstück durch die Schneidkante vom Gemüse bzw. der Frucht abgehoben und gelangt durch den Schneidspalt zur Anschlusslinie der Umlenkfläche.

Wenn zwischen dem Schälmesser und der Anschlusslinie ein Spalt ausgebildet ist, so wird der Spalt schmal gewählt. Die Anschlusslinie liegt beim Schälvorgang im Bereich der Schälebene bzw. ungefähr im Bereich einer Schälmesser-Ebene durch die Schneidkante und die Auflagelinie, so dass das gelöste Schalenstück über der Anschlusslinie an die Umlenkfläche gelangt. Bei den gängigen Schneidkanten wird die gelöste Schale im Bereich des Schälmessers etwas nach oben umgelenkt. Diese Weitergabe-Ausrichtung entspricht im Wesentlichen der Ausrichtung der von der Schneidkante wegführenden Führungsoberfläche. Beim Auftreffen eines freien Schalenanfanges auf die Umlenkfläche muss diese nach oben weiter umgelenkt werden. Um eine Umlenkung nach unten zu verhindern, ist der nach vorne und oben offene Winkel zwischen der Führungsoberfläche und der Umlenkfläche, dort wo ein freier Schalenanfang auf die Umlenkfläche auftrifft, zumindest etwas grösser als 90°. Bei einem schmalen Spalt zwischen dem Schälmesser und der Anschlusslinie bzw. einem kurzen Abstand zwischen der Schneidkante und der Linie bei der ein freier Schalenanfang auf die Umlenkfläche auftrifft, entspricht die Ausrichtung der Schale im Wesentlichen der Ausrichtung der Führungsoberfläche. Wenn die Führungsoberfläche nach oben konkav bzw. nach oben gekrümmt ist, so entspricht die Ausrichtung der Führungsoberfläche im Wesentlichen der Ausrichtung des in Schälrichtung hinteren Endbereiches der Führungsoberfläche. Ein Winkel zwischen der Umlenkfläche und der Führungsoberfläche hängt beim Schälen auch von der gewählten Ausrichtung des Halters bzw. der Umlenkfläche ab. Entsprechend soll der angegebene Winkel für die beim Schälen möglichen Ausrichtungen des Halters grösser als 90° sein.

Die Umlenkfläche erstreckt sich von der Anschlusslinie bis zu einer von dieser abgewandten Austrittslinie. Im Bereich zwischen der Anschlusslinie und der Austrittslinie umfasst die Umlenkfläche den Flächenbereich, an den die Schale stösst nachdem sie von der Schneidkante des Schälmessers abgetrennt ist. Die Ausrichtung und die Form der Umlenkfläche wird so gewählt, dass die vom Schälmesser auf die Umlenkfläche treffenden Schalenanfangsbereiche nach oben und anschliessend in Schälrichtung nach vorne umgelenkt werden. Die Lage der Anschlusslinie relativ zur Schneidkante stellt sicher, dass keine Schalenstücke in Schälrichtung hinter dem Schälmesser auf das zu schälende Gut gelangen können. Vorzugsweise ist die Umlenkfläche in Schnittebenen, welche quer zur Schneidkante des Schälmessers ausgerichtet sind, gegen das Schälmesser hin konkav ausgebildet.

Um ein Klebenbleiben der Schalenstücke an der Umlenkfläche zu verhindern, werden an der Umlenkfläche gegebenenfalls reibungsmindernde Elemente angeordnet oder ausgebildet. Vorzugsweise werden Stege, Rillen oder Zacken ausgebildet, die sich quer zur Schneidkante erstrecken.

Gemüseschäler mit einer Umlenkfläche ermöglichen ein Schälen mit minimalem Aufwand. Die abgelösten Schalen bleiben nicht auf dem zu schälenden Produkt liegen. Auf Bewegungen zum Abschütteln oder Wegstossen der Schalenstücke kann verzichtet werden. Weil die Schalenstücke nicht in einem Aufnahmebereich zurückgehalten werden, kann auch auf ein Leeren verzichtet werden.

Die Umlenkfläche kann sowohl direkt mit dem Schälmesser verbunden, als auch von diesem getrennt und mit dem Schälmesserhalter verbunden, ausgebildet werden. Dadurch können die verschiedenartigsten Gemüseschäler mit einer Umlenkfläche zu einem erfindungsgemässen Gemüseschäler weiterentwickelt werden. Bei den meisten Gemüseschälern kann bereits mit dem Einsetzen eines Schälmessers oder eines Juliennemessers mit daran befestigter Umlenkfläche ein erfindungsgemässer Gemüseschäler erhalten werden. Weil die Umlenkfläche gegebenenfalls das Schwenkverhalten eines Pendelschälmessers relativ zum Halter verändert, müssen die Anschläge für Schälmesser mit einer Umlenkfläche neu eingestellt werden.

Gemäss einer anderen, nicht näher aufgezeigten Ausführungsform ist die Auflagelinie der Klinge als zusätzliche Schneidkante ausgebildet, so dass das Schälmesser in zwei entgegengesetzten Richtungen zum Schälen eingesetzt werden kann. Dadurch funktioniert die Klinge einerseits wie ein herkömmlicher Gemüseschäler und andererseits wie diesen erfindungsgemässen Gemüseschäler mit einer Umlenkfläche.

Ein bevorzugter Gemüseschäler umfasst nebst der Umlenkfläche auch die Merkmale der Gemüseschäler gemäss der WO 03/070070 A1. Dabei ist die Umlenkfläche vorzugsweise als Teil des Halters ausgebildet und verbindet zwei seitliche Griffflächen. An den seitlichen Griffflächen ist auch das Schälmesser schwenkbar gelagert. Bei einem solchen Gemüseschäler ist die Ausdehnung des Halters in Schälrichtung kürzer als der Abstand zwischen den beiden Griffflächen. Aufgrund der kleinen Ausdehnung des Halters in Schälrichtung kann die Messerlage bereits mit kleinen Bewegungen stark verändert werden. Die Umlenkfläche und die Griffflächen sind vorzugsweise einstückig aus Metall oder Kunststoff gefertigt. Die konkave Umlenkfläche gibt dem Halter eine hohe Stabilität und verhindert eine Ausrichtungsänderung der Griffflächen. Das Schälmesser ist vorzugsweise als schwenkbar an den Griffflächen gelagerte Pendelklinge ausgebildet. Vorteilhafterweise ist an jeder Grifffläche eine Griffmulde ausgebildet.

Gemäss einer anderen, nicht gezeigten Variante kann ein Ausstecher an den Griffflächen in bekannten Formen ausgebildet bzw. angeordnet sein.

Ausführungsbeispiele des Erfindungsgegenstandes werden nachfolgend anhand der Zeichnungen näher erläutert, wobei alle beschriebenen und/oder bildlich dargestellten Merkmale für sich oder in beliebiger Kombination den Gegenstand der vorliegenden Erfindung bilden, unabhängig von ihrer Zusammenfassung in den Ansprüchen oder deren Rückbeziehungen. Es zeigen
- Fig. 1: eine perspektivische Darstellung eines von einer Hand gehaltenen Gemüse- schälers,
- Fig. 2: eine Ansicht eines Gemüseschälers von unten,
- Fig. 3: einen Schnitt durch einen Gemüseschäler beim Schälen,
- Fig. 4: eine Ansicht eines Halters in Schälrichtung von hinten,
- Fig. 5: eine Ansicht eines Halters in Schälrichtung von vorne,
- Fig. 6: einen Schnitt durch einen Gemüseschäler beim Schälen,
- Fig. 7: eine perspektivische Ansicht eines Gemüseschälers, bei dem die Umlenkfläche mit dem Schälmesser verbunden ist,
- Fig. 8: Draufsicht auf das Schälmesser mit der Umlenkfläche, und
- Fig. 9: Untenansicht des Schälmessers mit der Umlenkfläche.

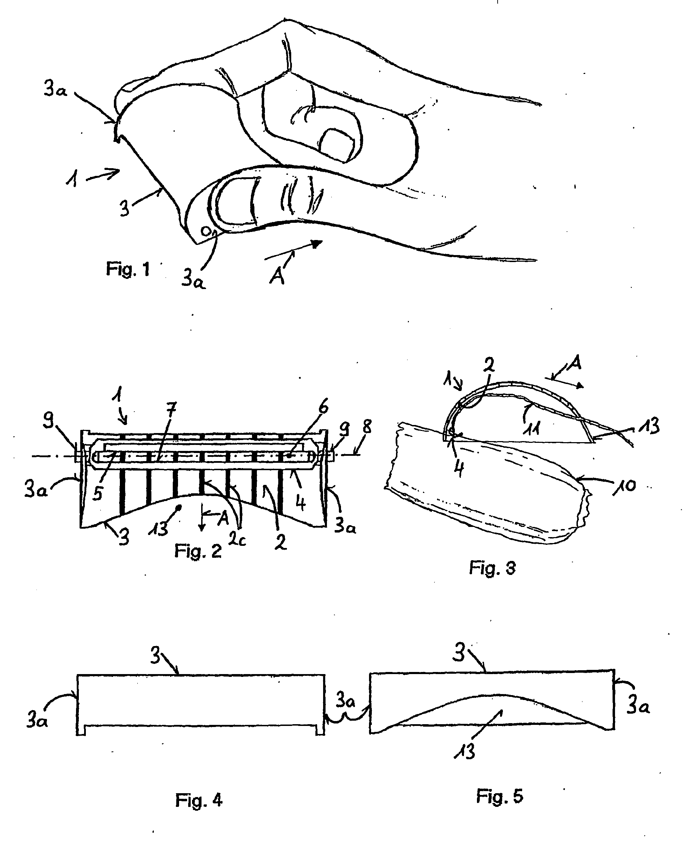

Die Figuren 1 bis 6 zeigen Gemüseschäler 1 mit einer Umlenkfläche 2 am Halter 3.

Der Halter 3 umfasst nebst der Umlenkfläche 2 zwei seitliche Griffflächen 3a. Am Halter 3 ist ein Schälmesser 4 schwenkbar gehalten. Das Schälmesser 4 ist üblicherweise ein einstückiges, aus Metall, Keramik oder Kunststoff gefertigtes Element. Es umfasst eine Schneidkante 5, einen Schneidspalt 6 und eine Auflagelinie 7. Die Schälmesserachse 8 erstreckt sich in der Längsrichtung des Schälmessers 4 durch zwei seitlich vorstehende Achslager 9 und somit im Wesentlichen parallel zur Schneidkante 5. Beim Schälen ist das Schälmesser im Wesentlichen in einer Schälebene tangential zum Schälgut 10 ausgerichtet. Die Auflagelinie 7 liegt direkt vor dem Lösen des Schalenstückes 11 an der freien Oberfläche des Schälgutes 10 an und die Schneidkante 5 liegt bei der Unterseite des abgetrennten Schalenstückes 11. Bei der Bewegung des Schälmessers 4 in Schälrichtung A wird das Schalenstück 11 durch die Schneidkante 5 vom Schälgut 10 (Gemüse bzw. der Frucht) abgehoben und gelangt durch den Schneidspalt 6 zur Umlenkfläche 2.

Die Umlenkfläche 2 erstreckt sich von einer Anschlusslinie 2a bis zur Austrittslinie 2b. Das Schalenstück 11 trifft im Bereich zwischen der Anschlusslinie 2a und der Austrittslinie 2b auf die Umlenkfläche 2. Um eine Umlenkung nach unten zu verhindern, ist der nach vorne und oben offene Winkel zwischen einer Führungsoberfläche 5a und der Umlenkfläche 2, dort wo ein freier Schalenanfang auf die Umlenkfläche 2 auftrifft, zumindest etwas grösser als 90°. Wenn die Führungsoberfläche 5a nach oben gekrümmt ist, so entspricht die Ausrichtung der Führungsoberfläche 5a im Wesentlichen der Ausrichtung des in Schälrichtung hinteren Endbereiches der Führungsoberfläche 5a. Ein Winkel zwischen der Umlenkfläche und der Führungsoberfläche hängt beim Schälen auch von der gewählten Ausrichtung des Halters 3 bzw. der Umlenkfläche 2 ab. Entsprechend soll der angegebene Winkel für die beim Schälen möglichen Ausrichtungen der Führungsoberfläche 5a relativ zur Umlenkfläche 2 grösser als 90° sein. Um den Ausrichtungsbereich des Messers am Halter zu beschränken, ist mindestens ein Anschlagselement 12 vorgesehen.

Die Umlenkfläche lenkt das Schalenstück 11 beim Schälen in Schälrichtung A nach vorne um. Damit das umgelenkte Schalenstück 11 aus dem Gemüseschäler 1 austreten kann, umfasst der Gemüseschäler 1 in Schälrichtung A vor dem Schälmesser 4 einen Austrittsbereich 13. Abgeschnittene Schalenstücke 11 werden von der Umlenkfläche 2 in Schälrichtung A nach vorne umgelenkt und fallen durch den Austrittsbereich 13 aus dem Gemüseschäler 1 hinaus.

An der Innenseite der Umlenkfläche 2 sind gegebenenfalls reibungsmindernde Elemente 2c angeordnet oder ausgebildet. Vorzugsweise werden Stege oder Rillen ausgebildet, welche ein Haften der Schalenstücke 11 verhindern.

Gemäss Fig. 1 bis 6 ist die Ausdehnung des Gemüseschälers 1 in Schälrichtung A kleiner als in Richtung der Längsachse 8 des Schälmessers 4. Die Griffflächen 3a sind derart gestaltet, dass sie zwischen dem Daumen und wenigstens einem der Finger des Benützers festklemmbar sind.

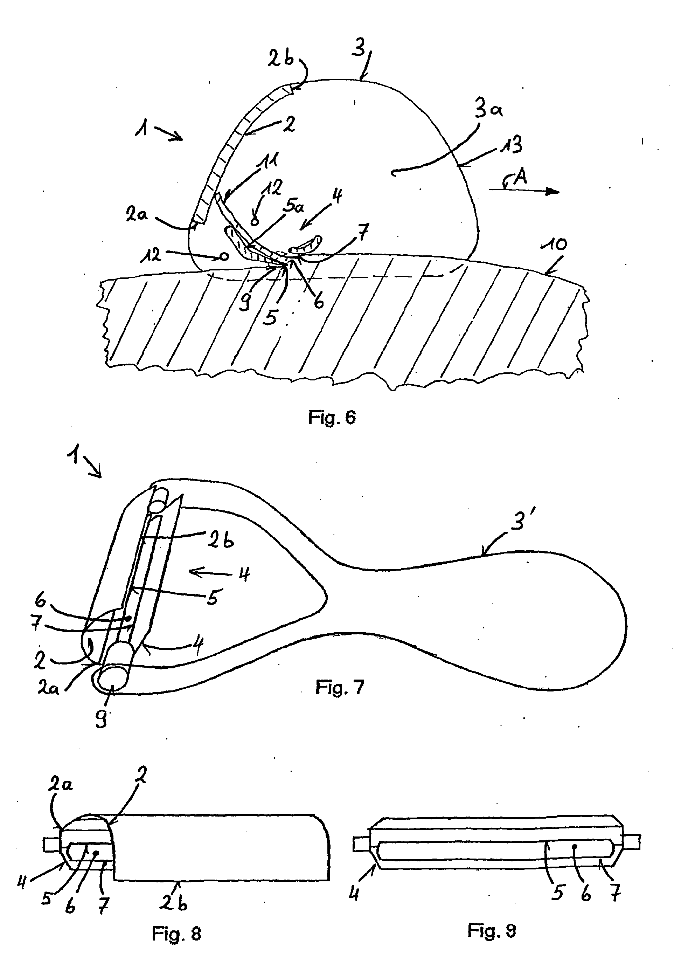

Die Figuren 7 bis 9 zeigen ein Schälmesser 4 mit daran befestigter und somit direkt anschliessender Umlenkfläche 2. Die Umlenkfläche 2 erstreckt sich von der Anschlusslinie 2a bis zur Austrittslinie 2b. Im Bereich zwischen der Anschlusslinie 2a und der Austrittslinie 2b umfasst die Umlenkfläche 2 einen Flächenbereich der abgetrennte Schalenstücke in Schälrichtung A nach vorne umlenkt. Durch die Ausrichtung, die Formgebung und das direkte Anschliessen der Umlenkfläche an das Schälmesser wird gewährleistet, dass keine Schalenstücke in Schälrichtung hinter dem Schälmesser auf das zu schälende Gut gelangen können. Das Schälmesser 4 mit der Umlenkfläche 2 kann man in herkömmliche Gemüseschäler, bzw. herkömmliche Halter 3', einsetzen und erhält dabei einen erfindungsgemässen Gemüseschäler 1.

Vorzugsweise umfasst die Umlenkfläche 2 einen Flächenbereich, der gegen das Schälmesser 4 hin konkav ausgebildet ist. Durch diese gegen das Schälmesser 4 hin konkave Formgebung wird gewährleistet, dass die Schalenstücke 11 sicher in Schälrichtung A nach vorne umgelenkt werden.

Das Schälmesser 4 ist bevorzugt in Form einer Pendelklinge ausgebildet. Es versteht sich von selbst, dass es auch fest mit dem Halter verbunden sein kann. Dies gilt insbesondere bei messerförmigen Gemüseschälern.

## Patentansprüche

1. Gemüseschäler (1) mit einem Halter (3, 3') und einem am Halter (3, 3') gelagerten Schälmesser (4), welches eine in seiner Längsausdehnung ausgerichtete Schneidkante (5), einen Schneidspalt (6), eine Auflagelinie (7), sowie eine von der Schneidkante wegführende Führungsoberfläche umfasst und beim Schälen im Wesentlichen in einer Schälebene tangential zum Schälgut (10) ausgerichtet ist, wobei die Auflagelinie (7) auf der der Schneidkante (5) gegenüberliegenden Seite des Schneidspaltes (6) ausgebildet ist und beim Schälen die Schälrichtung (A) von der Schneidkante (5) gegen die Auflagelinie (7) gerichtet ist, **dadurch gekennzeichnet, dass** der Gemüseschäler (1) eine Umlenkfläche (2) umfasst, die beim Schälvorgang zumindest teilweise in Schälrichtung (A) hinter dem Schälmesser (4) liegt, sich zumindest über einen mittleren Längsbereich, vorzugsweise aber über die ganze Längsausdehnung, des Schälmessers (4) erstreckt, in Schnittebenen quer zur Schälmesserachse (8) von einer Anschlusslinie (2a) und einer von dieser abgewandten Austrittslinie (2b) berandet ist, wobei beim Schälen der nach oben offene Winkel zwischen der Führungsoberfläche und der Umlenkfläche, dort wo ein freier Schalenanfang auf die Umlenkfläche trifft, grösser als 90° ist und die Umlenkfläche (2) eine relativ zur Schälrichtung nach oben und anschliessend nach vorne umlenkende Form umfasst, und dass der Gemüseschäler (1) in Schälrichtung (A) vor dem Schälmesser (4) einen Austrittsbereich (13) umfasst, so dass abgeschnittene Schalenstücke (11) von der Umlenkfläche (2) in Schälrichtung (A) nach vorne umgelenkt werden und durch den Austrittsbereich (13) aus dem Gemüseschäler (1) hinausfallen.

2. Gemüseschäler (1) nach Anspruch 1, **dadurch gekennzeichnet, dass** die Umlenkfläche (2) einen Flächenbereich umfasst, der gegen das Schälmesser (4) hin konkav ausgebildet ist.

3. Gemüseschäler (1) nach Anspruch 1 oder 2, **dadurch gekennzeichnet, dass** die Umlenkfläche (2) vom Schälmesser (4) getrennt am Halter (3) angeordnet ist.

4. Gemüseschäler (1) nach Anspruch 3, **dadurch gekennzeichnet, dass** die Anschlusslinie (2a) beim Schälvorgang bei der Ebene des Schälmessers (4) liegt, so dass ein gelöstes Schalenstück (11) über der Anschlusslinie (2a) an die Umlenkfläche (2) gelangt.

5. Gemüseschäler (1) nach Anspruch 1 oder 2, **dadurch gekennzeichnet, dass** die Umlenkfläche (2) am Schälmesser (4) ausgebildet ist.

6. Gemüseschäler (1) nach einem der Ansprüche 1 bis 5, **dadurch gekennzeichnet, dass** der Halter (3) zwei seitliche Griffflächen (3a) umfasst, an denen das Schälmesser (4) in der Form eines Pendelmessers beidseits gelagert ist, und die Ausdehnung des Halters (3) in Schälrichtung (A) kürzer ist als der Abstand zwischen den beiden Griffflächen (3a).

7. Gemüseschäler (1) nach Anspruch 6, **dadurch gekennzeichnet, dass** die Umlenkfläche (2) und die Griffflächen (3a) einstückig aus Metall oder Kunststoff gefertigt sind.

8. Gemüseschäler (1) nach einem der Ansprüche 1 bis 7, **dadurch gekennzeichnet, dass** an der Umlenkfläche (2) reibungsmindernde Elemente (2c) angeordnet oder ausgebildet sind, vorzugsweise Stege, Rillen oder Zacken, die sich quer zur Schneidkante (5) erstrecken.

9. Gemüseschäler (1) nach einem der Ansprüche 1 bis 8, **dadurch gekennzeichnet, dass** die Auflagelinie (7) des Schälmessers (4) als zusätzliche Schneidkante (5) ausgebildet ist.

10. Gemüseschäler (1) nach einem der Ansprüche 1 bis 9, **dadurch gekennzeichnet, dass** die Schneidkante (5) in Form eines Juliennemessers ausgebildet ist.

## Claims

1. A vegetable peeler (1) with a handle (3, 3') and a peeling blade (4) secured to the handle (3, 3'), which encompasses a cutting edge 95) aligned in its longitudinal expansion, a cutting gap (6), a support line (7), as well as a guide surface leading away from the cutting edge, and is aligned essentially in a peeling plane tangentially to the peeled item (10) while peeling, wherein the support line (7) is formed on the side of the cutting gap (6) lying opposite the cutting edge (5), and the peeling direction (A) is directed from the cutting edge (5) against the support line (7) while peeling, **characterized in that** the vegetable peeler (1) encompasses a deflection surface (2) that lies at least partially in the peeling direction (A) behind the peeling blade (4) during the peeling process, extends at least over a middle longitudinal area, preferably over the entire longitudinal expansion, of the peeling blade (4), is bordered in sectional planes transverse to the peeling blade axis (8) by a connecting line (2a) and an exit line (2b) facing away from the latter, wherein, while peeling, the upwardly open angle between the guide surface and deflection surface is greater than 90° where the initiation of free peeling contacts the deflection surface, and the deflection surface (2) encompasses a shape that deflects upwardly and then toward the front relative to the peeling direction, and that the vegetable peeler (1) encompasses an outlet area (13) in the peeling direction (A) before the peeling blade (4), so that cut peeled pieces (11) are deflected toward the front by the deflection surface (2) in the peeling direction (A), and fall out of the vegetable peeler (1) through the outlet area (13).

2. The vegetable peeler (1) according to claim 1, **characterized in that** the deflection surface (2) encompasses a surface area that is concave toward the peeling blade (4).

3. The vegetable peeler (1) according to claim 1 or 2, **characterized in that** the deflection surface (2) is arranged separately from the peeling blade (4) on the handle (3).

4. The vegetable peeler (1) according to claim 3, **characterized in that** the connecting line (2a) lies by the plane of the peeling blade (4) during the peeling process, so that a detached peeled piece (11) gets to the deflection surface (2) via the connecting line (2a).

5. The vegetable peeler (1) according to claim 1 or 2, **characterized in that** the deflection surface (2) is formed on the peeling blade (4).

6. The vegetable peeler (1) according to one of claims 1 to 5, **characterized in that** the handle (3) encompasses two lateral handle surfaces (3a) on which the peeling blade (4) is mounted on either side in the form of a floating blade, and the expansion of the handle (3) in the peeling direction (A) is shorter than the distance between the two handle surfaces (3a).

7. The vegetable peeler (1) according to claim 6, **characterized in that** the deflection surface (2) and the handle surfaces (3a) are made out of a single piece from metal or plastic.

8. The vegetable peeler (1) according to one of claims 1 to 7, **characterized in that** friction-reducing elements (2c) are arranged or molded on the deflection surface (2), preferably webs, flutes or jags, which extend transverse to the cutting edge (5).

9. The vegetable peeler (1) according to one of claims 1 to 8, **characterized in that** the support line (7) of the peeling blade (4) is designed as an additional cutting edge (5).

10. The vegetable peeler (1) according to one of claims 1 to 9, **characterized in that** the cutting edge (5) is designed as a julienne blade.

## Revendications

1. Epluche-légumes (1) comprenant un support (3, 3') et un couteau éplucheur (4) monté sur le support (3, 3'), qui comporte une arête de coupe (5) orientée dans son extension longitudinale, une fente de coupe (6), une ligne d'appui (7) et une surface de guidage partant de l'arête de coupe et est orientée lors de l'épluchage sensiblement dans un plan d'épluchage tangentiellement au légume à éplucher (10), la ligne d'appui (7) étant réalisée sur le côté, opposé à l'arête de coupe (5), de la fente de coupe (6) et la direction d'épluchage (A) étant orientée lors de l'épluchage depuis l'arête de coupe (5) vers la ligne d'appui (7), **caractérisé en que** l'épluche-légumes (1) comporte une surface de déviation (2), qui se situe lors de l'opération d'épluchage au moins en partie dans la direction d'épluchage (A) derrière le couteau éplucheur (4), s'étend au moins sur une zone longitudinale moyenne, mais de préférence sur toute l'extension longitudinale, du couteau éplucheur (4), est bordée dans des plans de coupe transversalement à l'axe du couteau éplucheur (8) par une ligne de raccordement (2a) et une ligne de sortie (2b) opposée à cette ligne, l'angle ouvert vers le haut entre la surface de guidage et la surface de déviation, là où un début d'épluchure libre arrive sur la surface de déviation, étant supérieur à 90° lors de l'épluchage et la surface de déviation (2) comprenant une forme déviant par rapport au sens d'épluchage vers le haut et ensuite vers l'avant et en ce que l'épluche-légumes (1) comporte une zone de sortie (13) dans le sens d'épluchage (A) avant le couteau éplucheur (4), de sorte que des parties d'épluchure (11) coupées sont déviées de la surface de déviation (2) dans la direction d'épluchage (A) vers l'avant et tombent par la zone de sortie (13) hors de la sortie de l'épluche-légumes (1).

2. Epluche-légumes (1) selon la revendication 1, **caractérisé en ce que** la surface de déviation (2) comporte une zone de surface qui est conçue concave en direction du couteau éplucheur (4).

3. Epluche-légumes (1) selon la revendication 1 ou 2, **caractérisé en ce que** la surface de déviation (2) est disposée sur le support (3) séparément du couteau éplucheur (4).

4. Epluche-légumes (1) selon la revendication 3, **caractérisé en ce que** la ligne de raccordement (2a) se situe lors de l'opération d'épluchage sur le plan du couteau éplucheur (4), de sorte qu'un morceau d'épluchure (11) détaché parvient par la ligne de raccordement (2a) sur la surface de déviation (2).

5. Epluche-légumes (1) selon la revendication 1 ou 2, **caractérisé en ce que** la surface de déviation (2) est réalisée sur le couteau éplucheur (4).

6. Epluche-légumes (1) selon l'une quelconque des revendications 1 à 5, **caractérisé en ce que** le support (3) comporte deux surfaces de poignée (3a) latérales, sur lesquelles le couteau éplucheur (4) est logé des deux côtés sous la forme d'un couteau faisant le va-et-vient, et l'extension du support (3) dans le sens d'épluchage (A) est plus courte que la distance entre les deux surfaces de poignée (3a).

7. Epluche-légumes (1) selon la revendication 6, **caractérisé en ce que** la surface de déviation (2) et les surfaces de poignée (3a) sont formées d'une seule pièce en métal ou en plastique.

8. Epluche-légumes (1) selon l'une quelconque des revendications 1 à 7, **caractérisé en ce que** sur la surface de déviation (2) sont disposés ou réalisés des éléments (2c) réduisant le frottement, de préférence des nervures, des rainures ou des dentures, qui s'étendent transversalement à l'arête de coupe (5).

9. Epluche-légumes (1) selon l'une quelconque des revendications 1 à 8, **caractérisé en ce que** la ligne d'appui (7) du couteau éplucheur (4) est réalisée sous forme d'arête de coupe (5) supplémentaire.

10. Epluche-légumes (1) selon l'une quelconque des revendications 1 à 9, **caractérisé en ce que** l'arête de coupe (5) est réalisée sous la forme d'un couteau à julienne.
